# FASCICULE DE BREVET EUROPEEN

(11) **EP 0 734 971 B1**
(45) Date de publication et mention de la délivrance du brevet: **23.04.2003**
(21) Numéro de dépôt: 96400612.6
(22) Date de dépôt: 22.03.1996
(51) Int. Cl.: B65D 85/72, B29C 51/04

(54) **Récipient thermoformé en matière plastique, par exemple pour produit alimentaire, et son outillage de fabrication**
Warmgeformter Kunststoffbehälter, z.B. für Nahrungsmittel, sowie Vorrichtung zu seiner Herstellung
Thermoformed plastic container, e.g. for food products, and apparatus for its manufacture

(30) Priorité: 31.03.1995 FR 9503813
(43) Date de publication de la demande: 02.10.1996
(73) Titulaire: A.R.C.I.L., 78400 Chatou (FR)
(72) Inventeur: Becquart, Patrick, 92300 Levallois-Perret (FR); Geay, Jean-Michel, 95610 Eragny-sur-Oise (FR)
(74) Mandataire: Ramey, Daniel

(56) Documents cités:
- DE-A- 2 300 383
- FR-A- 2 347 258
- FR-A- 2 639 002
- US-A- 4 154 345
- US-A- 4 883 633

## Description

L'invention concerne un récipient thermoformé en matière plastique, en particulier pour des produits alimentaires tels que des crèmes, des desserts, des laitages, etc, et un outillage de fabrication de ce récipient.

Les récipients de ce type comprennent une ouverture de remplissage destinée à être fermée par un couvercle qui peut être simplement constitué d'une feuille de matière plastique (simple ou complexe) ou métallique collée ou soudée sur les bords de l'ouverture du récipient.

Pour consommer le produit contenu dans le récipient, une personne doit tout d'abord retirer, découper, déchirer ou arracher le couvercle et peut ensuite laisser le produit dans le récipient pour le consommer ou bien retourner le récipient et le vider dans une assiette. Lorsque le produit contenu dans le récipient a une consistance relativement solide, comme par exemple une crème, un flan, un gâteau, etc, il est peu commode de le démouler en conservant sa forme sauf si l'on perce un trou dans le fond du récipient pour former une entrée d'air, ce qui permet alors de démouler le produit par gravité sans l'abîmer et de laisser se recouvrir éventuellement d'un produit de nappage contenu dans le fond du récipient.

On a déjà proposé des récipients dont le fond comprend un orifice d'entrée d'air, fermé par une languette du type pelable ou arrachable qui assure l'étanchéité jusqu'à consommation du produit et qui facilite le démoulage du produit en libérant une entrée d'air lorsqu'elle est arrachée ou décollée.

Cependant, la fabrication de ces récipients comprend des opérations supplémentaires relativement complexes par rapport à la technique classique du thermoformage, et les récipients sont pourvus de moyens supplémentaires rapportés, de sorte que leur réalisation industrielle est délicate. En outre, les risques de fuite accidentelle de produit par l'orifice au cours du remplissage des récipients, de leur emballage, de leur manutention et de leurs transports divers ne sont pas négligeables, ce qui peut poser des problèmes de propreté autour des récipients, voire des problèmes de contamination et de conservation des produits.

On a également proposé des récipients dont les parois sont ondulées pour être déformables par pression de sorte que le consommateur peut serrer dans sa main le récipient ouvert et retourné au-dessus d'une assiette, pour vider son contenu dans l'assiette. Il est cependant moins facile de contrôler de cette façon le démoulage du produit et il faut en général secouer plus ou moins fortement le récipient pour que son contenu tombe dans l'assiette, ce qui ne favorise pas la conservation de la forme et de l'aspect du produit.

Comme décrit par exemple dans le Brevet US 4,154,345, on connaît encore des récipients comportant des moyens de démoulage de leur contenu qui ont l'inconvénient de nécessiter l'utilisation d'un outil particulier tel qu'une épingle, une fourchette, une couteau, etc, pour le démoulage de leur contenu. Mais, outre le fait que les outils nécessaires ne sont pas toujours disponibles sur le lieu de consommation, leurs manipulations peuvent être dangereuses ou délicates, surtout pour des enfants.

Enfin, on connaît également des récipients moulés par injection, dont le fond est formé d'une pièce avec un picot en saillie vers l'extérieur, rattaché au fond par une ligne ou zone d'épaisseur réduite que l'utilisateur peut rompre en exerçant avec le doigt une poussée ou une traction sur le picot, en créant ainsi une entrée d'air dans le récipient permettant le démoulage de son contenu. Une telle solution est décrite par exemple dans le document DE-A-2 300 383.

Cependant, la plus grande partie des récipients utilisés pour le conditionnement de produits alimentaires tels que des crèmes, des desserts, des laitages, etc, sont réalisés par thermoformage sur des machines qui comportent, outre les postes de thermoformage, des postes de remplissage des récipients, de fermeture étanche des récipients et de découpe de groupes de récipients. En outre, la technique utilisée pour les récipients moulés par injection, et qui consiste à réaliser une ligne d'affaiblissement autour d'un picot par diminution de l'épaisseur d'une paroi, n'est pas transposable à la fabrication des récipients par thermoformage d'une feuille de matière plastique, car dans ce cas, l'écrasement ou le laminage de la feuille pour former une zone ou une ligne d'épaisseur réduite se traduit par l'obtention d'une charnière souple et non par celle d'une ligne de fragilisation ou de rupture.

Le problème se pose donc de réaliser par thermoformage un récipient du type précité, permettant un démoulage aisé du produit qu'il contient, sans utiliser pour cela de moyens rapportés tels que des languettes pelables ou arrachables, ou un outil tel qu'une aiguille, un couteau, des ciseaux, etc.

L'invention a pour but d'apporter une solution simple et efficace à ce problème.

Elle propose, à cet effet, un récipient thermoformé en matière plastique, en particulier pour produit alimentaire, comprenant une ouverture destinée à être fermée par un couvercle ou un opercule, d'une paroi formée d'une pièce avec un élément d'appui d'au moins un doigt d'un utilisateur, caractérisé en ce que cet élément est en creux ou en saillie au centre d'une partie concave du fond du récipient, et est rattaché au fond par au moins une ligne de fragilisation qui est formée par une entaille ou une arête vive obtenue par un outil de coupe, et qui est susceptible d'être fissurée ou rompue au moins partiellement par action de l'utilisateur sur ledit élément pour constituer une entrée d'air dans le récipient, permettant le démoulage de son contenu par ladite ouverture.

Cet élément sera appelé "picot" dans la suite de la description.

L'utilisation d'un récipient selon l'invention est des plus simples :
par pression, traction ou torsion du picot, on arrive très facilement à rompre ou fissurer la paroi du récipient au niveau de l'entaille et constituer une entrée d'air qui permet le démoulage du contenu du récipient. En outre, la ligne de fragilisation, qui n'est pas masquée, permet un contrôle visuel de son état, ce qui constitue une garantie d'inviolabilité du récipient.

Dans une forme de réalisation préférée de l'invention, le picot est en saillie sur une partie rentrante du fond du récipient, à l'opposé de l'ouverture du récipient, et est relativement rigide et de forme allongée.

Dans ce cas, la ligne de fragilisation est constituée par une entaille formée dans la paroi de fond du récipient, à sa jonction avec la base du picot.

En variante, le picot peut être d'une forme écrasable, par exemple parallélépipédique, ou encore en forme de dièdre ou de soufflet, par exemple avec une section transversale en W, la ou les lignes de fragilisation associées à ce picot étant alors constituées par des arêtes vives de ce picot.

Dans une autre variante, le picot est de forme rentrante sur le fond du récipient et on peut utiliser un ustensile tel que le manche d'une petite cuillère que l'on introduit dans le picot pour rompre ou fissurer la ligne de fragilisation.

L'invention propose également un outillage de fabrication par thermoformage d'un récipient du type précité, cet outillage comprenant un poinçon de formage déplaçable dans un moule à la forme du récipient à réaliser, caractérisé en ce qu'il comprend un mandrin central monté sur le poinçon et comportant un conduit d'injection d'air pour le formage dudit élément sur la paroi du récipient, un outil de coupe tranchant pour former une ligne de prédécoupe ou une arête vive dans la paroi ou l'élément et une cavité centrale dans le moule pour recevoir le mandrin.

Dans un premier mode de réalisation, cet outillage comprend de plus des moyens de prédécoupe ou d'entaillage de la feuille de matière plastique : ces moyens sont constitués d'au moins une arête vive en saillie, située de préférence à l'extérieur du récipient, coopérant avec une surface d'appui pour couper ou entailler la feuille de matière plastique sur une fraction prédéterminée de son épaisseur, ces moyens de prédécoupe étant prévus sur le mandrin et le moule précités, ou bien étant agencés sur un poste de prédécoupe situé en aval du poste de formage et agissant sur le récipient entièrement formé et figé.

Dans un autre mode de réalisation de l'outillage, la cavité prévue dans le fond du moule pour recevoir le mandrin et donner sa forme au picot précité, comporte des faces formant au moins un dièdre à arête vive pour constituer une ligne de fragilisation du picot lors du thermoformage du récipient.

L'outillage selon l'invention peut donc être intégré à une machine classique de fabrication de récipients par thermoformage, en occupant peu ou pas de place sur la ligne de fabrication et en pouvant supporter des cadences de fabrication élevées.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
les figures 1 et 1 bis sont des vues schématiques de dessus et en coupe axiale d'un récipient selon l'invention;
les figures 2 et 2 bis sont des vues schématiques de dessus et en coupe axiale d'un autre mode de réalisation d'un récipient selon l'invention;

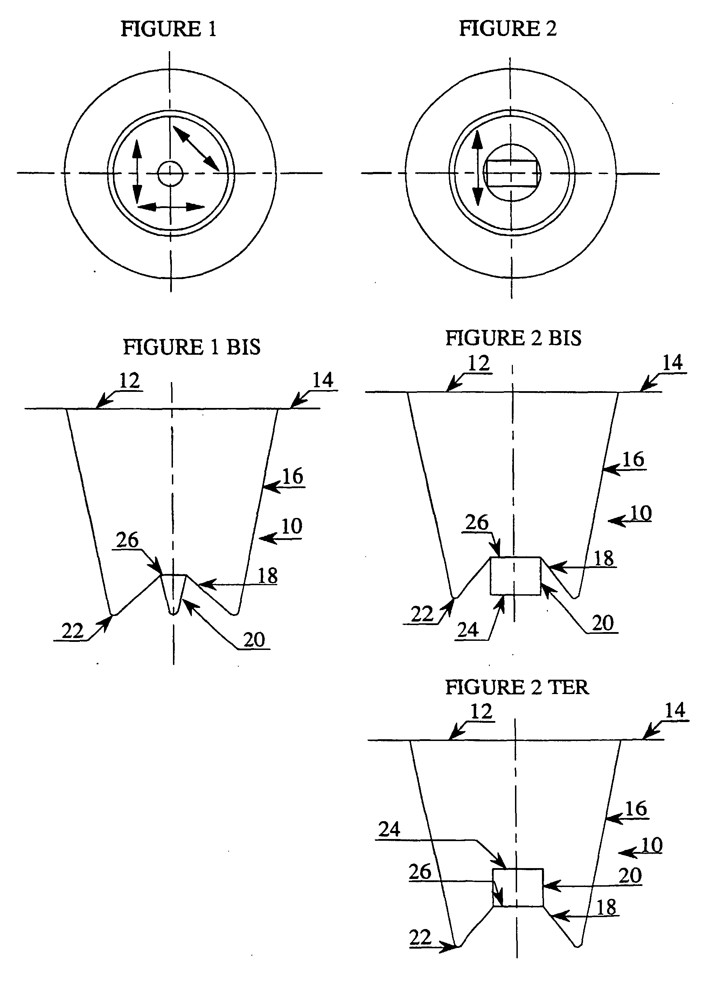

la figure 2 ter est une vue schématique en coupe axiale d'une variante de réalisation d'un récipient selon l'invention;

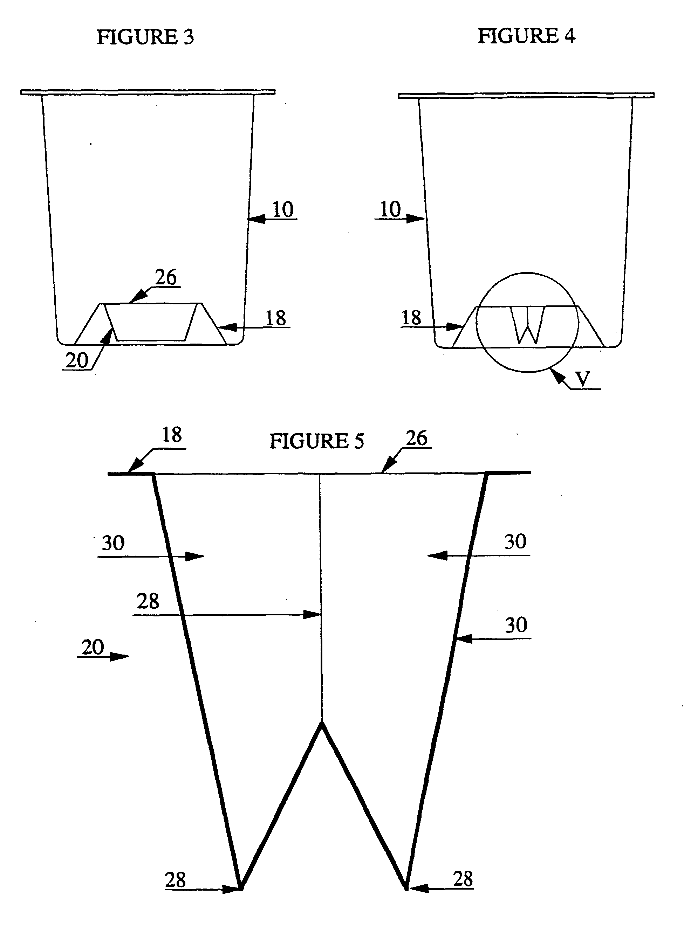

les figures 3 et 4 sont des vues en coupe axiale, à 90° l'une de l'autre, d'une autre forme de réalisation d'un récipient selon l'invention;
la figure 5 est une vue agrandie du détail encerclé V de la figure 4,

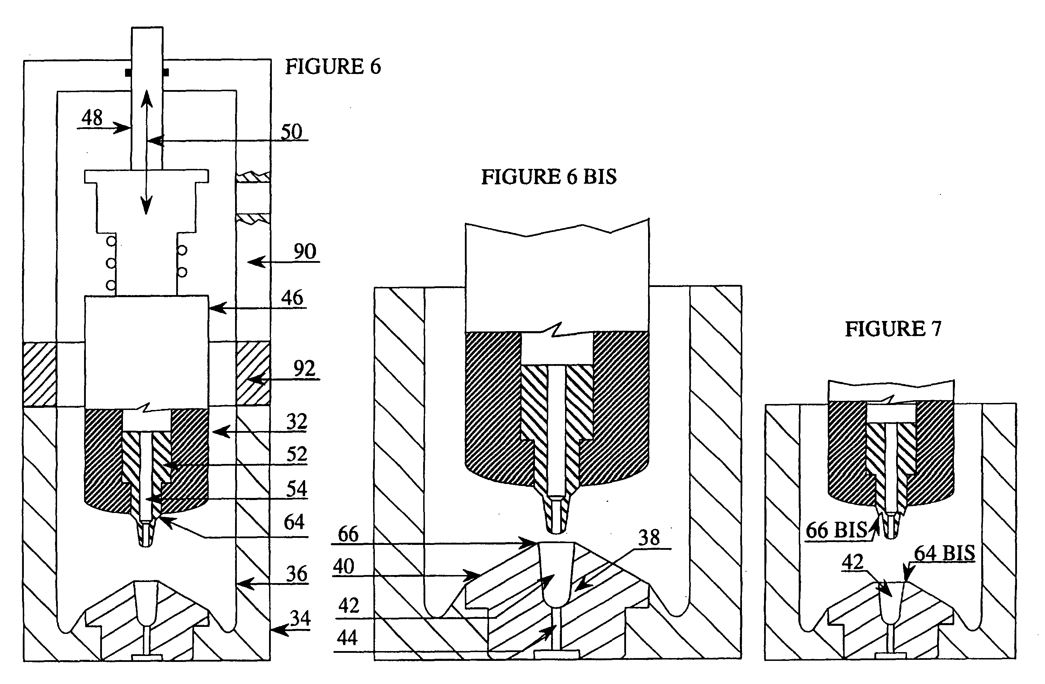

les figures 6 et 6 bis sont des vues schématiques en coupe des composants essentiels de l'outillage selon l'invention;
la figure 7 est une vue schématique partielle en coupe d'une variante de l'outillage;

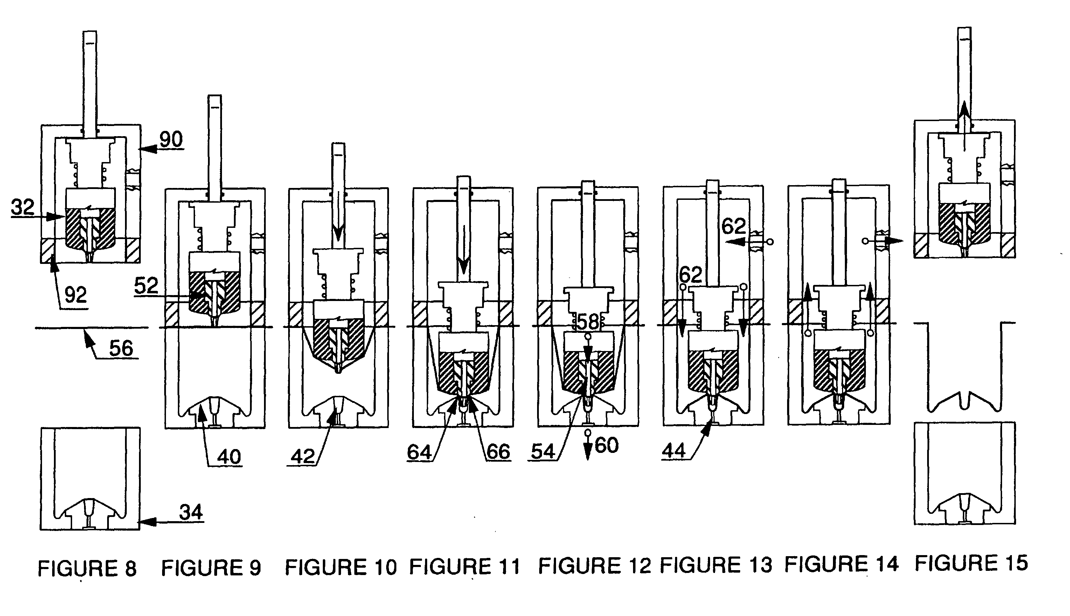

les figures 8 à 15 illustrent schématiquement la fabrication d'un récipient selon l'invention;

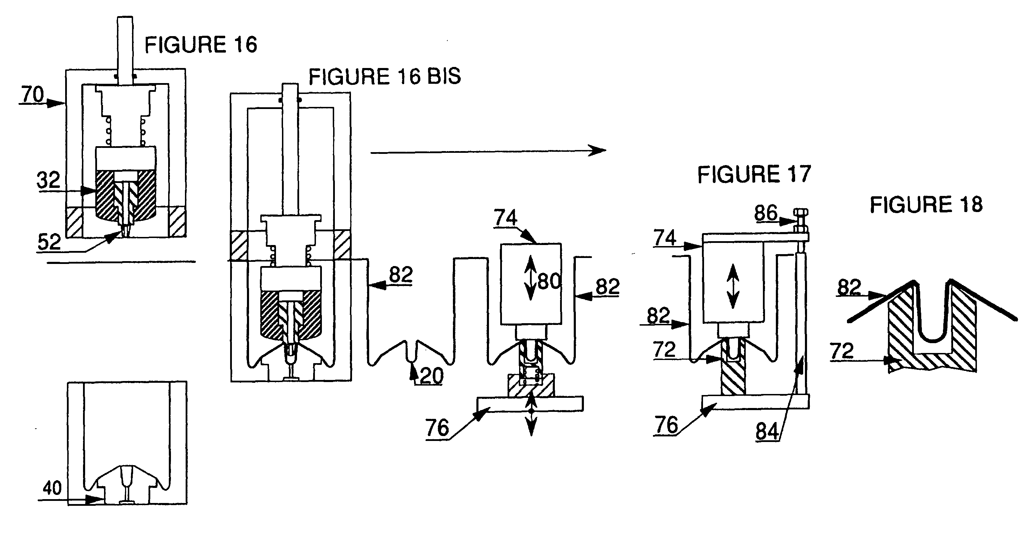

les figures 16 à 18 représentent schématiquement des variantes du mode de fabrication d'un récipient selon l'invention et de l'outillage correspondant.

On se réfère d'abord aux figures 1 et 1 bis, qui représentent schématiquement une première forme de réalisation d'un récipient selon l'invention, ce récipient 10 étant thermoformé en matière plastique et comprenant à son extrémité supérieure une ouverture 12 de remplissage entourée par un rebord 14 permettant la fixation d'un opercule de fermeture étanche de l'ouverture 12, le récipient comprenant également une paroi 16 de forme tronconique et un fond 18 rentrant à l'intérieur du récipient et comportant un élément ou "picot" 20 destiné à faciliter le démoulage du produit contenu dans le récipient 10. Le fond 18 rentre suffisamment à l'intérieur du récipient pour que le picot 20, formé en saillie vers l'extérieur, ait une longueur suffisante et se termine légèrement au-dessus du niveau de la base 22 du récipient, de façon à ce que celui-ci puisse être posé de façon stable sur un support horizontal.

Dans cet exemple, le picot 20 est de forme conique ou tronconique allongée et est relativement rigide.

Ce picot 20 est rattaché à la paroi de fond 18 par une ligne 26 de fragilisation de la paroi, cette ligne étant continue ou discontinue et ayant une résistance aux sollicitations mécaniques nettement plus faible que celle de la paroi de fond 18, tout en garantissant l'étanchéité du fond du récipient.

La ligne de fragilisation 26 est formée par une entaille de la paroi du récipient, cette entaille s'étendant sur une fraction prédéterminée de l'épaisseur de la paroi et ayant par exemple une profondeur de 0,05 à 0,1 mm quand l'épaisseur de la paroi est de 0,2 à 0,3 mm. Cette entaille résulte de l'action sur la paroi d'une arête vive et tranchante qui coupe partiellement ladite paroi et crée une discontinuité de la matière, et non d'une simple compression de la paroi visant à réduire son épaisseur par laminage ou fluage de matière, ce qui conduirait à la formation d'une ligne de pliage qui, selon la nature de la matière plastique, serait plus ou moins résistante à la rupture.

Dans ces conditions, une action exercée par au moins un doigt sur le picot 20, par exemple dans une direction sensiblement perpendiculaire à l'axe du récipient permet d'exercer sur la ligne de fragilisation 26 une contrainte supérieure à la résistance à la rupture de cette ligne et de créer une entrée d'air dans le récipient par rupture ou fissuration de la paroi le long de la ligne 26.

Le récipient peut donc être utilisé de la façon suivante :
lorsqu'il est dans la position représentée en figure 1, on retire l'opercule ou le couvercle fermant l'ouverture 12, on retourne le récipient au-dessus d'une assiette ou analogue et on exerce une contrainte avec un doigt sur le picot 20 pour fissurer ou rompre le fond 18 le long de la ligne 26, de façon à permettre l'entrée d'air dans le fond du récipient à l'opposé de l'ouverture 12, et faciliter le démoulage par gravité du produit contenu dans le récipient, sans dégrader la forme et l'aspect de ce produit.

Selon la nature et l'épaisseur de la matière plastique, et l'importance de la rupture que l'on souhaite obtenir, la ligne de fragilisation formée à la jonction du picot 20 et de la paroi de fond 18 du récipient peut être continue ou discontinue, et s'étendre ou non sur tout le périmètre de la base du picot 20.

Dans la variante de réalisation des figures 2 et 2 bis, le picot 20 de la paroi de fond 18 du récipient 10 est de forme sensiblement parallélépipédique allongée ou en forme de dièdre dont l'arête de sommet 24 se trouve vers le bas et est relié à la paroi de fond 18 par une ou plusieurs lignes de fragilisation 26, continues ou discontinues.

On utilise ce récipient de la même façon que celui de la figure 1, en exerçant une force de basculement sur le picot 20 qui tend à rompre ou fissurer la paroi de fond le long d'au moins une ligne 26.

Dans ces deux modes de réalisation, on peut également provoquer la rupture ou la fissuration de la paroi de fond 18 du récipient le long des lignes 26 en appliquant une combinaison de pressions axiale et radiale sur le picot.

Dans la variante de réalisation de la figure 2 ter, le picot 20 est de forme non plus saillante, mais rentrante sur le fond 18 du récipient 10, sa configuration permettant d'y introduire un ustensile simple tel que la queue d'une petite cuillère pour la rupture ou la fissuration de la ligne de fragilisation 26.

Dans la variante de réalisation des figures 3 à 5, le fond 18 du récipient 10 comporte un picot 20 en forme de soufflet ayant une section par exemple en W et qui comprend des lignes de fragilisation 28 constituées par des arêtes de sommet des dièdres formés par les faces planes 30 du picot, ces arêtes étant aussi vives que possible, c'est-à-dire ayant une section transversale en V et non en U, et étant réalisées par thermoformage.

Dans ce cas, on peut provoquer une entrée d'air dans le fond du récipient en serrant le picot 20 entre deux doigts, en le poussant d'un doigt ou en lui imprimant un mouvement de torsion ou de basculement, de façon à rompre ou fissurer la matière le long d'une arête vive 28 ou en un point de jonction de trois faces du picot.

En outre, la forme en soufflet du picot 20 peut contribuer au démoulage du contenu du récipient lorsque le picot 20 est comprimé entre les doigts.

Dans le mode de réalisation des figures 3 à 5, on peut également former des lignes de fragilisation 26 à la base du picot 20, par entaille de la paroi de fond 18 à sa jonction avec le picot 20, de la façon décrite en référence aux figures 1 et 1 bis.

Un mode de réalisation particulier d'un outillage permettant la fabrication des récipients selon l'invention comportant des lignes de fragilisation par entaille est représenté schématiquement aux figures 6 et 7 et comprend pour l'essentiel un poinçon de formage 32 et un moule 34.

Le moule 34 délimite un volume de moulage à la forme du récipient à réaliser et comprend une face interne 36 qui peut être cylindrique comme représenté et qui pourrait être tronconique, avec ou sans cannelures ou d'une forme démoulable quelconque, et un fond 38 comportant une pièce centrale 40 de formation du fond rentrant 18 du récipient et du picot 20 de démoulage, la pièce 40 comprenant une cavité axiale 42 à la forme du picot 20 à réaliser, reliée à l'extérieur par un conduit 44 d'échappement d'air.

Le poinçon de formage 32 comprend un corps par exemple cylindrique 46 dont le diamètre est inférieur à celui de la face interne 36 du moule 34, des moyens 48 (représentés très schématiquement) de déplacement contrôlé du poinçon 32 dans la direction indiquée par la double flèche 50, et un mandrin 52 logé à l'intérieur du corps 46 et qui est monté fixe dans le poinçon, ou déplaçable axialement en translation dans celui-ci entre une position basse ou sortie (représentée au dessin) de formation du picot 20 du récipient et une position haute ou effacée, inactive.

Le mandrin 52 comprend par ailleurs un conduit 54 de soufflage d'air, débouchant à l'extrémité inférieure du mandrin 52 et relié par son extrémité supérieure à des moyens d'alimentation en air sous pression (non représentés).

Les moyens de formation d'une ligne de fragilisation 26 sur la paroi de fond du récipient comprennent, dans l'exemple des figures 6 et 6bis, une arête vive 66 formée en saillie sur la partie supérieure de la pièce de fond 40, cette arête vive étant à contour circulaire continu ou discontinu, et une surface d'appui correspondante 64, par exemple de forme tronconique ou plate, prévue sur la partie inférieure du mandrin et s'étendant de part et d'autre de la projection axiale de l'arête vive 66.

L'arête vive 66 (ainsi que le mandrin) est réalisée en un matériau très dur, par exemple en un métal tel que de l'acier utilisé pour des outils de coupe, afin d'être tranchante et de conserver son tranchant sur une longue période de service.

Comme représenté en figure 7, les dispositions de l'arête de coupe et de la surface d'appui peuvent être inversées, l'arête de coupe 66 bis étant formée en saillie sur la partie inférieure du mandrin 52 tandis que la surface d'appui 64 bis est formée par une face plane de la partie supérieure de la pièce centrale de fond de moule, autour de la cavité 42. La première solution présente l'avantage que l'arête de coupe 66 est à l'extérieur du récipient thermoformé et que son usure ou sa dégradation ne peut se traduire par la présence de traces ou de débris métalliques dans le récipient.

La fabrication d'un récipient selon l'invention au moyen de l'outillage qui vient d'être décrit, est illustrée schématiquement aux figures 8 à 15.

En figure 8, le poinçon de formage 32 est en position haute et est sorti du moule 34, et une feuille 56 de matière plastique thermoformable est disposée et maintenue au dessus du moule 34, et portée à la température appropriée de thermoformage (par exemple de 130°C environ dans le cas du polystyrène).

En figure 9, le moule 34, le contre-moule 90 et le support 92 du poinçon sont rapprochés et serrés sur la feuille 56.

En figure 10, le poinçon 32 est descendu à mi-course environ et l'ensemble poinçon 32 - mandrin 52 a commencé à déformer la feuille 56. Dans cet exemple, le mandrin est fixe sur le poinçon et est sorti en permanence.

En figure 11, le poinçon 32 est descendu à l'intérieur du moule 34 jusqu'à venir en butée sur la pièce de fond 40, l'extrémité inférieure du mandrin 52 étant introduite dans la cavité 42 supérieure de cette pièce pour continuer de déformer la feuille 56 à l'intérieur de la cavité 42.

Dans cette position, la partie inférieure du mandrin 52 est en appui étanche sur le bord supérieur de la cavité 42 et isole cette cavité du reste du moule. De plus, la feuille 56 est appliquée par la surface d'appui 64 du mandrin sur l'arête de coupe 66 formée sur la pièce de fond 40, ce qui a pour effet d'entailler la feuille 56 sur une partie de son épaisseur et de créer la ligne de fragilisation 26.

On peut alors, comme représenté schématiquement par la flèche 58 en figure 12, amener de l'air sous pression par le canal 54 du mandrin 52 et plaquer la feuille de matière plastique 56 sur la surface interne de la cavité 42 de la pièce de fond 40, pour mettre en forme le picot du récipient et figer cette forme, l'air contenu dans la cavité 42 s'échappant à l'extérieur par le canal 44 précité (figure 6 bis) comme indiqué par la flèche 60.

Ensuite, comme représenté schématiquement en figure 13 par les flèches 62, on injecte de l'air dans le moule 34 autour du poinçon 32 pour plaquer la feuille de matière plastique 56 sur la face interne du moule 34 et donner sa forme au récipient proprement dit.

En figure 14, l'espace interne de l'ensemble moule - contre moule est mis à l'échappement.

La figure 15 représente l'empreinte plastique dégagée du moule après formage.

La formation correcte de la ligne de fragilisation 26 nécessite un réglage précis des positions de fin de course du poinçon et du mandrin par rapport à la pièce de fond de moule, ce réglage pouvant être assuré par tous moyens appropriés, par exemple par :
- pression d'un ressort sur le poinçon portant un mandrin fixe,
- calage mécanique réglable du poinçon ou du mandrin par rapport au moule (réglage fin réalisé par exemple au moyen d'une vis micrométrique),
- pression d'un ressort ou d'un fluide sur le mandrin monté mobile dans le poinçon,
- montage de la pièce centrale de fond par vissage dans le fond du moule et réglage de position par vissage ou dévissage de cette pièce.

On a représenté schématiquement dans les figures 16 et 16 bis une variante de réalisation de l'outillage selon l'invention, cette variante différant de celle qui vient d'être décrite en ce que les moyens de formation de la ligne de fragilisation 26 sur la paroi de fond du récipient sont prévus en aval du poste 70 de thermoformage, ces moyens comprenant un outil de coupe 72, par exemple de forme cylindrique, dont le bord supérieur forme une arête vive et tranchante semblable à celle précédemment décrite et des moyens 74 d'appui de la paroi de fond du récipient sur l'outil de coupe.

Ce dernier est guidé en translation verticale sur un support 76 et est soumis à l'action d'un ressort le sollicitant vers le haut. Les moyens d'appui 74 sont déplaçables verticalement comme indiqué par la double flèche 80 au moyen par exemple d'un vérin pneumatique ou hydraulique, ou d'une came, ou d'une motorisation spécifique.

Dans ce cas, le poinçon de formage 32, le mandrin 52 et la pièce 40 de fond de moule prévus au poste 70 ne servent qu'au thermoformage du récipient et ne comprennent pas de moyens de formation d'une ligne de fragilisation dans le fond du récipient.

L'outillage des figures 16 et 16 bis est donc utilisé de la façon suivante :
un récipient est thermoformé au poste 70, à partir d'une feuille de matière plastique, par descente du poinçon 32 et du mandrin 52 dans le moule et soufflage d'air, comme précédemment décrit. Ensuite, le moule de thermoformage est ouvert et le récipient thermoformé 82 est démoulé, la feuille de matière plastique est avancée d'un (ou de plusieurs) pas jusqu'aux moyens précités de formation de la ligne de fragilisation, le support 76 est remonté de façon à ce que le picot 20 du récipient 82 soit engagé à l'intérieur de l'outil 72 et les moyens 74 sont descendus de façon contrôlée pour pousser la paroi de fond 18 sur l'arête vive du bord supérieur de l'outil de coupe 72 et former une entaille autour de la base du picot 20 dans la paroi de fond du récipient refroidi.

Dans la variante représentée schématiquement aux figures 17 et 18, l'outil de coupe 72 est monté directement sur un support 76 sur lequel est prévu une butée mécanique 84 limitant la course de descente des moyens d'appui 74. Dans ce cas, c'est la hauteur de la butée 84 qui va définir la profondeur de l'entaille formée dans la paroi de fond du récipient thermoformé 82. Des moyens de réglage 86 agencés entre la butée 84 et les moyens d'appui 74 permettent d'ajuster cette profondeur.

## Revendications

1. Récipient thermoformé en matière plastique, en particulier pour produit alimentaire, comprenant une ouverture (12) destinée à être fermée par un couvercle ou un opercule, et une paroi (18) formée d'une pièce avec un élément (20) d'appui d'au moins un doigt d'un utilisateur, **caractérisé en ce que** cet élément (20) est en creux ou en saillie au centre d'une partie concave du fond du récipient (18), et est rattaché au fond par au moins une ligne (26, 28) de fragilisation qui est formée par une entaille ou une arête vive obtenue par un outil de coupe, et qui est susceptible d'être fissurée ou rompue au moins partiellement par action de l'utilisateur sur ledit élément pour constituer une entrée d'air dans le récipient, permettant le démoulage de son contenu par ladite ouverture (12).

2. Récipient selon la revendication 1, **caractérisé en ce que** ledit élément (20) est un picot relativement rigide et de forme allongée, manipulable facilement par au moins un doigt sans l'aide d'un outil.

3. Récipient selon la revendication 1 ou 2, **caractérisé en ce que** l'élément (20) est de forme écrasable par exemple parallélépipédique, tronconique, en forme de dièdre, ou en forme de soufflet par exemple avec une section transversale en W.

4. Récipient selon l'une quelconque des revendications 1 à 3, **caractérisé en ce que** ladite ligne de fragilisation (26) est une entaille formée dans une zone de liaison entre l'élément (20) et la paroi du récipient.

5. Récipient selon l'une des revendications précédentes, **caractérisé en ce que** l'élément (20) comprend au moins une arête vive (28) formant ladite ligne de fragilisation.

6. Outillage de fabrication par thermoformage d'un récipient selon l'une des revendications précédentes, comprenant un poinçon de formage (32) déplaçable dans un moule (34) à la forme du récipient à réaliser, **caractérisé en ce qu'**il comprend un mandrin central (52) monté sur le poinçon (32) et comportant un conduit (54) d'injection d'air pour le formage dudit élément (20) sur la paroi du récipient, un outil de coupe tranchant pour former une ligne de prédécoupe ou une arête vive (26, 28) dans la paroi (18) ou l'élément (20) et une cavité centrale (42) dans le moule pour recevoir le mandrin (52).

7. Outillage selon la revendication 6, **caractérisé en ce qu'**il comprend des moyens de prédécoupe de la feuille de matière plastique à la jonction de l'élément (20) avec la paroi du récipient, ces moyens comprenant au moins une arête vive (64) en saillie coopérant avec une surface d'appui (66) pour couper ou entailler la feuille (56) de matière plastique sur une fraction prédéterminée de son épaisseur.

8. Outillage selon la revendication 7, **caractérisé en ce que** les moyens de prédécoupe (64, 66) sont agencés sur le mandrin (52) et le moule (34), ou en un poste de prédécoupe (72,74) placé immédiatement en aval d'un poste de thermoformage (70).

9. Outillage selon la revendication 6, **caractérisé en ce que** la cavité (42) prévue dans le fond du moule (34) pour recevoir le mandrin (52) et donner sa forme à l'élément (20) précité, comporté des faces formant au moins un dièdre à arête vive pour constituer une ligne de fragilisation (28) dudit élément.

10. Outillage selon une des revendications 6 à 9, **caractérisé en ce que** le mandrin (52) est guidé en déplacement axial à l'intérieur du poinçon de formage (32).

## Claims

1. Thermoformed plastic container, particularly for food products, comprising an opening (12) adapted to be closed off by a cover or lid, and a wall (18) formed in one piece with an element (20) for supporting at least one finger of the user, **characterised in that** this element (20) is recessed or protruding in the centre of a concave part in the base of the container (18), and is attached to the base by at least one frangible line (26, 28) which is formed by a notch or sharp edge obtained by means of a cutting tool, and which is capable of being at least partly split or broken by the action of the user on said element to form an air inlet into the container, enabling its contents to be unmoulded through said opening (12).

2. Container according to claim 1, **characterised in that** the element (20) is a relatively rigid elongated tab which can easily be manipulated with at least one finger without the need for any tools.

3. Container according to claim 1 or 2, **characterised in that** the element (20) is of a collapsible shape, e.g. parallelepipedinal, frustum-shaped, dihedral or concertina-shaped, for example, in the form of a W in cross section.

4. Container according to any one of claims 1 to 3, **characterised in that** the frangible line (26) is a notch formed in a connecting zone between the element (20) and the wall of the container.

5. Container according to one of the preceding claims, **characterised in that** the element (20) comprises at least one sharp edge (28) forming said frangible line.

6. Tooling for manufacturing a container according to one of the preceding claims by thermoforming, comprising a forming punch (32) which is movable into a mould (34) in the shape of the container which is to be produced, **characterised in that** it comprises a central mandrel (52) mounted on the punch (32) and having an air inlet duct (54) for shaping said element (20) on the wall of the container, a slicing cutting tool for forming a precut line or a sharp edge (26, 28) in the wall (18) or the element (20) and a central cavity (42) in the mould to receive the mandrel (52).

7. Tooling according to claim 6, **characterised in that** it comprises means for pre-cutting the sheet of plastics at the junction of the element (20) with the wall of the container, said means comprising at least one protruding sharp edge (64) co-operating with a support surface (66) for cutting or notching the sheet (56) of plastics through a predetermined fraction of its thickness.

8. Tooling according to claim 7, **characterised in that** the pre-cutting means (64, 66) are provided on the mandrel (52) and the mould (34), or in a pre-cutting station (72, 74) located immediately downstream of a thermoforming station (70).

9. Tooling according to claim 6, **characterised in that** the cavity (42) provided in the base of the mould (34) for receiving the mandrel (52) and imparting its shape to the abovementioned element (20) comprises faces forming at least one sharp-edged dihedron to produce a frangible line (28) in said element.

10. Tooling according to one of claims 6 to 9, **characterised in that** the mandrel (52) is guided axially inside the forming punch (32).

## Patentansprüche

1. Wärmegeformter Behälter aus Kunststoff, insbesondere für Lebensmittel, der eine Öffnung (12) aufweist, die dazu bestimmt ist, von einem Deckel oder einer Abdeckung verschlossen zu werden, und der eine Wandung (18) aufweist, die einteilig mit einem Drückelement (20) für wenigstens einen Finger eines Anwenders ausgebildet ist, **dadurch gekennzeichnet, dass** das Element (20) in der bzw. aus der Mitte eines konkaven Bereichs des Bodens des Behälters vertieft bzw. herausragend ist, und mit dem Boden durch wenigstens eine Bruchlinie (26, 28) verbunden ist, die durch eine Einkerbung oder eine scharfe Kante gebildet ist, welche mit Hilfe eines Schneidwerkzeugs gewonnen wird, und die durch Einwirken des Anwenders auf das Element wenigstens teilweise gespalten oder aufgebrochen werden kann, um einen Einlass für Luft in den Behälter zu bilden, der ein Herausnehmen von dessen Inhalt durch die Öffnung (12) erlaubt.

2. Behälter nach Anspruch 1, **dadurch gekennzeichnet, dass** das Element (20) ein Vorsprung ist, der relativ steif ist und eine längliche Form aufweist, und der leicht, ohne Zuhilfenahme eines Werkzeugs, mit wenigstens einem Finger gehandhabt werden kann.

3. Behälter nach Anspruch 1 oder 2, **dadurch gekennzeichnet, dass** das Element (20) eindrückbar ist, und zum Beispiel die Form eines Parallelepipeds, eines Kegelstumpfes, eines Dieders oder eines Balgs mit zum Beispiel einem W-förmigen Querschnitt aufweist.

4. Behälter nach einem der Ansprüche 1 bis 3, **dadurch gekennzeichnet, dass** die Bruchlinie (26) eine Einkerbung ist, die in einem Verbindungsbereich zwischen dem Element (20) und der Wandung des Behälters ausgebildet ist.

5. Behälter nach einem der vorstehenden Ansprüche, **dadurch gekennzeichnet, dass** das Element (20) wenigstens eine scharfte Kante (28) aufweist, die die Bruchlinie bildet.

6. Werkzeugeinrichtung zur Herstellung durch Wärmeformung eines Behälters gemäß einem der vorstehenden Ansprüche, die einen Formstempel (32) umfasst, der in einer Spritzform (34) mit der Form des herzustellenden Behälters verschiebbar ist, **dadurch gekennzeichnet, dass** sie einen mittleren Dorn (52) zur Bildung des Elements (20) in der Wand des Behälters umfasst, der an dem Formstempel (32) angebracht ist und einen Lufteinspritzkanal (54) aufweist, und dass sie ein Schneidscherwerkzeug zur Bildung einer Vorschneidelinie oder einer scharfen Kante (26, 28) in der Wandung (18) oder dem Element (20) und einen mittleren Hohlraum (42) in der Spritzform zur Aufnahme des mittleren Dorns (52) umfasst.

7. Werkzeugeinrichtung nach Anspruch 6, **dadurch gekennzeichnet, dass** sie an der Verbindungsstelle des Elements (20) mit der Wandung des Behälters Mittel zum Vorschneiden der Kunststofffolie umfasst, wobei diese Mittel wenigstens eine hervorragende scharfe Kante (64) aufweisen, die mit einer Abquetschfläche (66) zusammenwirkt, um die Kunststofffolie (56) auf einen vorbestimmten Bruchteil ihrer Dicke einzuschneiden oder einzukerben.

8. Werkzeugeinrichtung nach Anspruch 7, **dadurch gekennzeichnet, dass** die Vorschneidmittel (64, 66) auf dem Dorn (52) und auf der Spritzform (34) oder an einer Vorschneidstelle (72, 74) angeordnet sind, die unmittelbar nach einer Wärmeformungsstelle (70) angeordnet ist.

9. Werkzeugeinrichtung nach Anspruch 6, **dadurch gekennzeichnet, dass** der Hohlraum (42), der in dem Boden der Spritzform (34) angeordnet ist, um den Dorn (52) aufzunehmen und dem genannten Element (20) seine Form zu verleihen, Seiten aufweist, die wenigstens einen Dieder mit einer scharfen Kante bilden, um eine Bruchlinie (28) des Elements zu bilden.

10. Werkzeugeinrichtung nach einem der Ansprüche 6 bis 9, **dadurch gekennzeichnet, dass** der Dorn (52) bei der axialen Verschiebung im Inneren des Formstempels (32) geführt ist.
